# EUROPEAN PATENT APPLICATION

(11) **EP 1 585 313 A2**
(43) Date of publication of application: **12.10.2005**
(21) Application number: 05006958.2
(22) Date of filing: 30.03.2005
(51) Int. Cl.: H04N 5/00, H04N 7/16, H04N 7/173

(54) **Method, network, and apparatus for on-demand independent multimedia information distribution**

(30) Priority: 07.04.2004 US 819868
(71) Applicant: Broadcom Corporation, California 92618-7013 (US)
(72) Inventor: Sandeep, Relan, 560037 Bangalore (IN); Brajabandhu, Mishra, 93 Bangalore (IN); Rajendra, Khare, 75 Bangalore (IN)
(74) Representative: Jehle, Volker Armin

(57) **Abstract**

Disclosed herein is a method and system for transmitting on-demand multimedia information to an end-user's set-top-box (STB). The multimedia information may be received from at least one satellite via a satellite receiver. The satellite receiver may convey the multimedia information to a service provider location. At the service provider location, a content server may receive a request for transmission of multimedia information. The request may be validated to determine whether the request is authorized. Upon determining that the request is authorized, the multimedia information may be transmitted by a distribution unit to the STB at the end-user location. In contrast to prior systems, instead of transmitting every channel that a service provider offers to each end-user location, in accordance with an embodiment of the present invention, only the particular multimedia information (channel) being requested is transmitted to each end-user location.

## Description

### RELATED APPLICATIONS

[Not Applicable]

### FEDERALLY SPONSORED RESEARCH OR DEVELOPMENT

[Not Applicable]

### [MICROFICHE/COPYRIGHT REFERENCE]

[Not Applicable]

### BACKGROUND OF THE INVENTION

Cable television (TV) has become a widely subscribed to commodity. Cable TV typically comprises a plurality of audio/video (A/V) transmissions accumulated in a central office, for example. The A/V transmissions may be accumulated in a content server, for example. The content server is an information storage unit adapted to collect, accumulate, package, disseminate, and broadcast multimedia data to clients at various locations remote from the central office. A common central content server may be located in a central office of a service provider. The content server may comprise a plurality of content servers residing in multiple geographic locations.

Typically, cable TV transmissions (channels) are distributed to end-users over cables, thus cable TV. The channels may be distributed from the content server located at the cable TV service provider's location, The service provider's content server transmits all of the channels simultaneously on a single shared cable to an end-user location. Multiple clients, end-users, or customers subscribe to the services (channels) provided by the content server of the service provider. A television set and a set-top-box (STB) may be located at the end-user's location to decode and display the channels. The STB provides end-users access to only those channels that the end-user has subscribed.

Ordinarily, there may be a signal distribution unit situated at the cable TV service provider's location. The signal distribution unit is adapted to receive all channels from at least one satellite signal receiving unit, and subsequently from at least one satellite. The subscribing end-user's STB is connected to the end-user's TV set. The end-user may be provided with a smart card for authentication and identification purposes.

Each end-user may subscribe to different channel packages, that is, the number of channels subscribed to by each end-user may vary. Cables connect the signal distribution unit at the service provider's location to each STB and TV set at each individual end-user location. The signal distribution unit transmits all of the channels to all of the end-user locations at once.

The STB is adapted to permit access: (viewing) to channels that the end-user has subscribed, while barring access (denying viewing) of channels that the end-user has not subscribed. The end-user may select a subscribed channel for viewing by remotely controlling the STB, causing the STB to decode and send a particular channel to the TV set for display and viewing.

Because all channels are being transmitted to each end-user location, end-users may be able to illegally decode unsubscribed channels for viewing causing the service provider to lose revenue. Additionally, as the number of channels being transmitted increased, the amount of bandwidth required for transmission increases. The vast majority of bandwidth, however, is wasted. End-users typically watch one or two channels at a time on a particular TV set. Additionally, most of the time the TV set is off. The result is that in many instances, as much as or more than 99% of the bandwidth (channels) being transmitted is wasted and not viewed.

Further limitations and disadvantages of conventional and traditional approaches will become apparent to one of skill in the art, through comparison of such systems with some aspects of the present invention as set forth in the remainder of the present application with reference to the drawings appended hereto.

### SUMMARY OF THE INVENTION

Aspects of the present invention may be found in a multimedia distribution network. The network may comprise a content server. The content server may be adapted to receive and manage a plurality of multimedia transmissions from at least one satellite receiver. The plurality of multimedia transmissions may each comprise a plurality of streaming multimedia channels. The network may also comprise a distribution unit. The distribution unit may be adapted to independently transmit on-demand the streaming multimedia channels. The network may also comprise a plurality of end-user set-top-boxes (STBs). Each of the plurality of end-user STBs may be adapted to independently request a streaming multimedia channel. The distribution unit may be adapted to acquire each requested streaming multimedia channel from the content server and independently transmit each requested streaming multimedia channel respectively to each of the plurality of end-user STBs on-demand.

In an embodiment according to the present invention, the content server may also comprise a storage unit for receiving and storing multimedia transmission information.

In an embodiment according to the present invention, the content server may be adapted to provide on-demand access to streaming media channels being received from the satellite receiver to the distribution unit. The content server may also be adapted to validate and authorize channel requests received from the plurality of end-user STBs.

In an embodiment according to the present invention, the distribution unit and the plurality of end-user STBs may communicate via one of a wired or wireless connection. The distribution unit may comprise a plurality of transmission heads. The transmission heads may comprise one of switches and relays adapted to maintain continuous communication with the STBs at a plurality of end-user locations.

In an embodiment according to the present invention, the distribution unit may communicate with the plurality of end-user STBs via a wireless receiver and wireless transmitter.

In an embodiment according to the present invention, the plurality of end-user STBs may comprise a processor for processing and managing channel requests and received multimedia channel information, a decoder for decoding received multimedia channel information. The multimedia channel information may be encoded for transmission. The STB may also comprise an operating system, random access memory for buffering multimedia channel information during processing and decoding, a transmitter for transmitting channel requests to the distribution unit, and a receiver for receiving multimedia channel information and message associated with channel requests.

In an embodiment according to the present invention, the network may further comprise a use meter. The use meter may monitor channel requests and length of viewing of multimedia information for each of the plurality of end-user STBs.

In an embodiment according to the present invention, the network may further comprise a use memory. The use meter may be adapted to store monitored channel request information and length of viewing of multimedia information for each of the plurality of end-user STBs in the use memory for later evaluation.

In an embodiment according to the present invention, the network may further comprise a subscriber database memory storing subscriber information for each of a plurality of end-user subscribers. The subscriber database memory may comprise at least one of channels subscribed, end-user STB information, subscriber spending limits, and subscriber personal information.

Aspects of the present invention may be found in a method of reducing bandwidth use in a multimedia distribution network. The method may comprise transmitting a channel request from a set-top-box (STB) to a multimedia information provider, receiving the channel request in at least one of a content server and a distribution unit, evaluating the channel request to determine whether the channel request is valid and authorized. If the channel request is determined to be valid and authorized, transmission of the requested channel may be initiated, and if the channel request is determined to be invalid and unauthorized, a response to the channel request may comprise a message indicating that the channel request is unauthorized.

In an embodiment according to the present invention, the multimedia information provider and the STB may communicate one of wired or wirelessly.

In an embodiment according to the present invention, the method may further comprise receiving and storing multimedia transmission information and providing on-demand access to streaming media transmissions requested.

In an embodiment according to the present invention, the method may further comprise accessing and evaluating a subscriber database memory to determine whether a channel request is valid and authorized.

In an embodiment according to the present invention, the subscriber database memory may comprise at least one of end-user STB information, end-user channel subscription information, end-user spending limit information and end-user blocked channel information.

In an embodiment according to the present invention, initiating a channel request may comprise transmitting requested channel multimedia information to the STB at an end-user location.

In an embodiment according to the present invention, responding to the channel request with a message may also comprise one of issuing a prompt to subscribe to the requested channel and issuing a prompt to pay for viewing the requested channel.

In an embodiment according to the present invention, the method may further comprise metering and accounting of multimedia usage by each of a plurality of end-user STBs, the metering is performed by a use meter. The use meter may monitor end-user channel selections and time of viewing information. Monitored information may be stored in a use memory. End-user viewing habits may be subsequently evaluated and analyzed.

In an embodiment according to the present invention, the method may further comprise creating a use log of end-user viewing activity in the use memory. The use log may comprise channel requests received from end-users STBs and length of time of channel transmission. The use log may be stored in the use memory and may be compared against a program listing for channels and times to determine viewing habits of end-users.

In an embodiment according to the present invention, only selected and requested multimedia information may be transmitted to individual end-users.

Aspects of the present invention may be found in a set-top-box (STB) for receiving multimedia information from a multimedia distribution network. The STB may comprise an antenna for communicating with a wireless multimedia distribution office, a processor for processing channel request and received multimedia information, an audio/video decoder for decoding multimedia transmissions, random access memory for buffering information during processing and decoding, an operating system, and a combination transmitter/receiver.

In an embodiment according to the present invention, the STB may further comprise a cable output providing transmission of received and decoded multimedia information to a display apparatus.

In an embodiment according to the present invention, an end-user may remotely select to view a channel, wherein the STB may be adapted to determine whether the end-user is subscribed and authorized to view the selected channel. If the selected channel is unauthorized for viewing, then the STB may display a message on a display apparatus informing the end-user. The message may prompt the end-user to subscribe to the selected channel.

In an embodiment according to the present invention, upon receiving a channel selection request from an end-user, the STB may be adapted to wirelessly transmit the channel request to a distribution unit at a local service provider location. The channel request may be transmitted by the combination transmitter/receiver.

In an embodiment according to the present invention, the STB may be adapted to wirelessly receive transmitted channel multimedia information.

In an embodiment according to the present invention, a multimedia transmission may be received at the antenna and conveyed to the processor in the STB, wherein the processor may convey the multimedia transmission to the audio/video decoder, wherein the audio/video decoder may decode the multimedia transmission and transmit the decoded multimedia transmission via a cable output to a display apparatus.
According to an aspect of the invention, a multimedia distribution network is provided comprising:
a content server, the content server being adapted to receive and manage a plurality of multimedia transmissions from at least one satellite receiver, the plurality of multimedia transmissions each comprising a plurality of multimedia channels;
a distribution unit for receiving a plurality of requests for particular ones of the plurality of multimedia channels from a corresponding plurality of end-user set-top-boxes (STBs).
Advantageously, the distribution unit is adapted to independently transmit on-demand the plurality of multimedia channels.
Advantageously, each of the plurality of end-user STBs is adapted to independently request a multimedia channels.
Advantageously, the distribution unit is adapted to acquire each requested multimedia channel from the content server and independently transmit each requested multimedia channel respectively to each of the plurality of end-user STBs on-demand.
Advantageously, the content server also comprises a storage unit for receiving and storing multimedia transmission information.
Advantageously, the content server is adapted to provide on-demand access to streaming media channels being received from the satellite receiver to the distribution unit, and wherein the content server is also adapted to validate and authorize channel requests received from the plurality of end-user STBs.
Advantageously, the distribution unit communicates to the plurality of end-user STBs one of wired or wirelessly, and wherein the distribution unit comprises a plurality of transmission heads, the transmission heads comprising one of switches and relays adapted to maintain continuous communication with the STBs at a plurality of end-user locations.
Advantageously, the distribution unit communicates with the plurality of end-user STBs via a wireless receiver and wireless transmitter.
Advantageously, the network further comprises:
a use meter, the use meter monitoring channel requests and length of viewing of multimedia channel information for each of the plurality of end-user STBs, and
a use memory, wherein the use meter is adapted to store monitored channel request information and length of viewing time of multimedia channel information for each of the plurality of end-user STBs in the use memory for later evaluation.
Advantageously, the network further comprises: a subscriber database memory storing subscriber information for each of a plurality of end-user subscribers, the subscriber database memory comprising at least one of a listing of channels subscribed, end-user STB information, subscriber spending limits, and subscriber personal information.
According to an aspect of the invention, a method of reducing bandwidth use in a multimedia distribution network is provided, the method comprising:
receiving a channel request in at least one of a content server and a distribution unit from a set-top-box (STB);
evaluating the channel request to determine whether the channel request is valid and authorized;
wherein if the channel request is determined to be valid and authorized, initiating transmission of the requested channel, and if the channel request is determined to be invalid and unauthorized, responding to the channel request with a message indicating that the channel request is unauthorized.
Advantageously, the multimedia information provider communicates to the STB one of via wire or wirelessly.
Advantageously, the method further comprises receiving and storing multimedia channel information, and providing on-demand access to streaming multimedia channels requested.
Advantageously, the method further comprises accessing and evaluating a subscriber database memory to determine whether a channel request is valid and authorized.
Advantageously, the subscriber database memory comprises at least one of end-user STB information, end-user channel subscription information, end-user spending limit information, and end-user blocked channel information.
Advantageously, initiating a channel request may comprise transmitting requested channel multimedia information to the STB at an end-user location.
Advantageously, responding to the channel request with a message may also comprise one of issuing a prompt to subscribe to the requested channel and issuing a prompt to pay for viewing the requested channel.
Advantageously, the method further comprises:
metering of multimedia usage of each of a plurality of STBs, the metering being performed by a use meter, the use meter monitoring end-user channel selections and time of viewing information, monitored information being stored in a use memory; and
creating a use log of end-user viewing activity in the use memory, the use log comprising channel requests received from the STBs and length of time of channel transmission, the use log being stored in the use memory and being compared against a program listing for channels and times, wherein end-user viewing habits are determined by subsequently evaluating and analyzing the monitored information.
Advantageously, only selected and requested multimedia channel information is transmitted to individual STBs.
According to an aspect of the invention, a multimedia distribution network is provided comprising a plurality of end-user STBs adapted to request a multimedia channel, wherein the end-user STBs comprise:
a processor for processing and managing channel requests and received multimedia channel information, wherein multimedia channel information comprises encoded audio information and encoded video information;
a decoder for decoding the received multimedia channel information, the multimedia channel information is encoded for transmission, wherein the decoder comprises a combination audio and video decoder unit;
a transmitter for transmitting channel requests to the distribution unit; and
a receiver for receiving multimedia channel information and messages associated with the channel requests, wherein the transmitter and receiver comprise a combination transmitter/receiver unit.
According to an aspect of the invention, a set-top-box (STB) is provided adapted to request a multimedia channel and receive multimedia information from a multimedia distribution network, the STB comprising:
an antenna for communicating with a wireless multimedia distribution office;
a processor for processing and managing channel requests and received multimedia information, the multimedia information comprising audio and video information;
an audio decoder for decoding audio information;
an video decoder for decoding video information;
a transmitter for transmitting channel requests to the distribution unit; and
a receiver for receiving multimedia channel information and messages associated with the channel requests.
Advantageously, the audio decoder and the video decoder comprise a combination audio and video decoder unit.
Advantageously, the transmitter and receiver comprise a combination transmitter and receiver unit.
Advantageously, the STB further comprises a cable output providing transmission of received and decoded multimedia information to a display apparatus.
Advantageously, upon an end-user selecting to view a channel, the STB is adapted to determine whether the end-user is subscribed and authorized to view the selected channel, wherein if the selected channel is unauthorized for viewing, then the STB displays a message on a display apparatus informing the end-user, and wherein the message prompting the end-user to one of subscribe to the selected channel or pay to view the selected channel.
Advantageously, upon receiving a channel selection request, the STB is adapted to wirelessly transmit the channel request to a distribution unit at a local service provider location.
Advantageously, the STB is adapted to wirelessly receive transmitted multimedia channel information from a distribution unit at a service provider location.
Advantageously, a multimedia transmission is received at the antenna of the STB and conveyed to the processor in the STB, the processor is adapted to convey the multimedia transmission to the audio decoder and the video decoder, wherein the audio decoder and the video decoder are adapted to decode the multimedia transmission, wherein the decoded multimedia transmission is transmitted via a cable output to a display apparatus.

These and other features and advantages of the present invention may be appreciated from a review of the following detailed description of the present invention, along with the accompanying figures in which like reference numerals refer to like parts throughout.

### BRIEF DESCRIPTION OF SEVERAL VIEWS OF THE DRAWINGS

**Figure 1** is a perspective diagram illustrating a satellite transmission/reception system in accordance with an embodiment of the present invention;

**Figure 2** is a perspective diagram illustrating multimedia display components at an end-user location in accordance with an embodiment of the present invention;

**Figure 3** is a block diagram illustrating a multimedia distribution network in accordance with an embodiment of the present invention;

**Figure 3A** is a block diagram illustrating a multimedia distribution and metering system in accordance with an embodiment of the present invention;

**Figure 4A** is a block diagram illustrating a cable multimedia distribution network in accordance with an embodiment of the present invention;

**Figure 4B** is a block diagram illustrating a wireless multimedia distribution network in accordance with an embodiment of the present invention;

**Figure 5** is a block diagram illustrating a set-top-box multimedia unit in accordance with an embodiment of the present invention;

**Figure 6** is a flow diagram illustrating a method of evaluating an channel request in accordance with an embodiment of the present invention;

**Figure 7** is a flow diagram illustrating a method of evaluating a channel request in accordance with an embodiment of the present invention; and

**Figure 8** is a flow diagram illustrating a method of logging and monitoring end-user viewing information in accordance with an embodiment of the present invention.

### DETAILED DESCRIPTION OF THE INVENTION

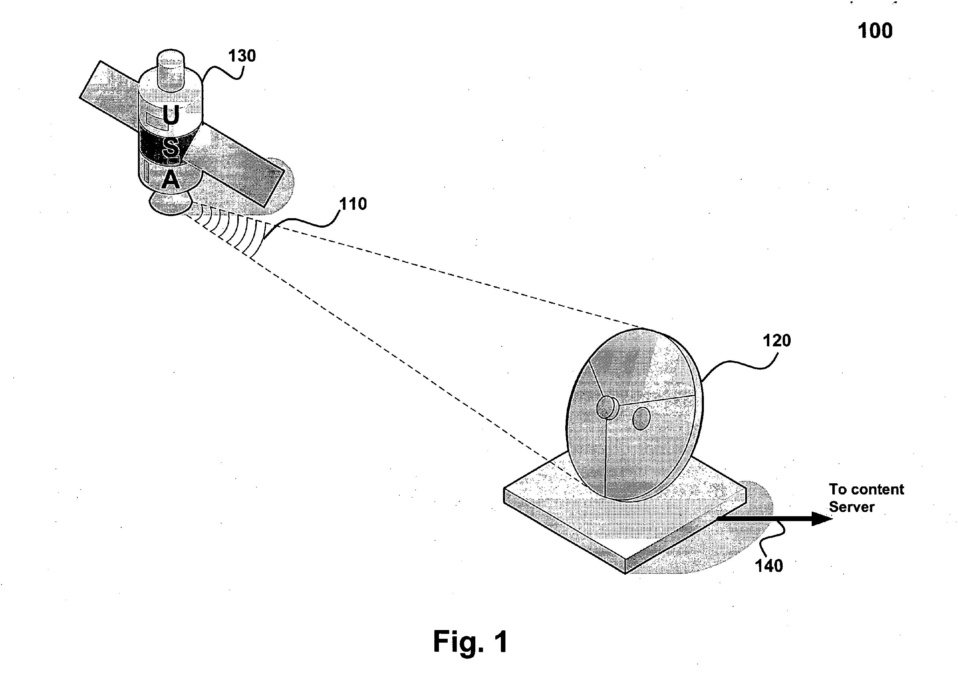

**Figure 1** is a perspective diagram 100 illustrating a satellite transmission/reception system in accordance with an embodiment of the present invention. In **Figure 1**, a satellite 130 is illustrated transmitting multimedia information 110 to a satellite receiver 120. The satellite receiver 120 may be located proximate a service provider location.

The service provider may comprise a cable television service provider, an Internet service provider, a radio service provider, and other multimedia service providers. The multimedia information received at the satellite receiver 120 may be conveyed to the service provider location via transmission cable 140.

The satellite transmission/reception system illustrated in **Figure 1** may comprise a plurality of satellites 130 and a plurality of satellite receivers 120, wherein each satellite 130 may transmit a plurality of multimedia channels to corresponding satellite receivers 120.

In an embodiment according to the present invention, the plurality of satellite receivers may be located in a different geographic location from the service provider location(s). The plurality of satellite receivers may be arranged in an array, wherein each satellite receiver is pointed to and receives transmissions from a corresponding satellite.

At a satellite receiver array location, multimedia information for all channels that a service provider offers may be accumulated and encoded together for further satellite transmission to a plurality of remotely located respective service provider locations for further dissemination and distribution.

In accordance with an embodiment of the present invention, each of a plurality of multimedia transmissions may comprise a plurality of television channels, a plurality of radio channels, a plurality of Internet transmissions, etc. The plurality of multimedia transmissions may be conveyed to content servers at a plurality of service provider locations.

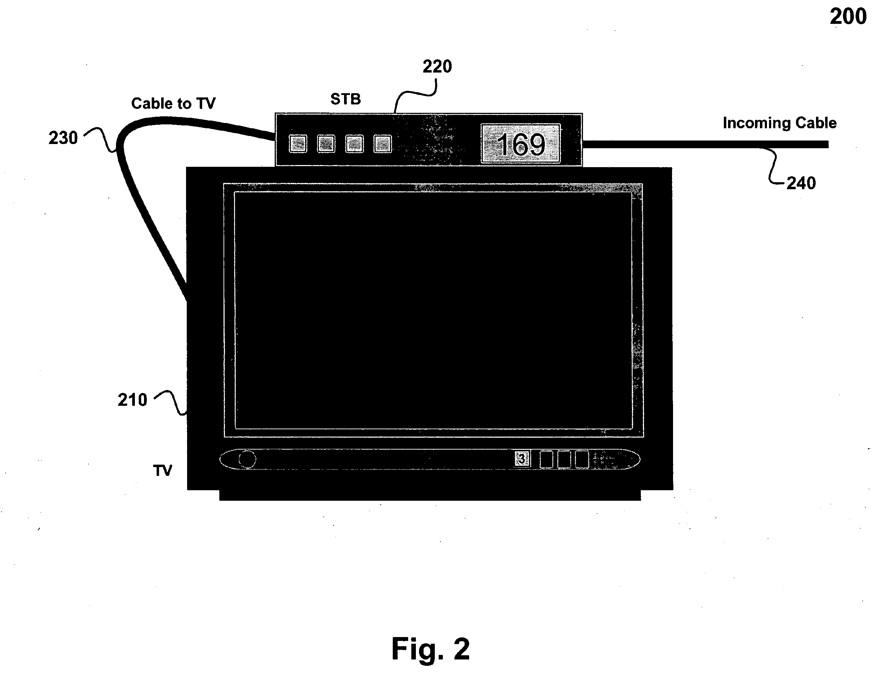

**Figure 2** is a perspective diagram 200 illustrating multimedia display components at an end-user location in accordance with an embodiment of the present invention. **Figure 2** illustrates a TV set 210 and an associated set-top-box (STB) 220. At the end-user location, a multimedia transmission may be received from an incoming cable 240. The incoming cable 240 may be directly or indirectly connected to a content server at a local service provider location.

The multimedia transmission transmitted through the incoming cable 240 may be received at STB 220. From the STB 220, another cable 230 may connect the STB 220 to the TV set 210. The multimedia transmission received at the end-user location comprises every channel available for displaying or viewing that the service provider offers, whether the channel is subscribed to or not.

The multimedia transmission, because of the vast amounts of information being transmitted, (i.e., every channel the service provider offers), has a very large bandwidth. However, at an individual television set, for example TV set 210, an end-user may only be able to watch at most 2 channels, assuming that the TV set 210 is adapted to provide picture-in-picture (PIP) display.

Assuming that the multimedia transmission received at the end-user location comprises 600 to 1000 individual channels capable of being subscribed and viewed, being simultaneously transmitted, then even if the end-user watches 2 channels at once via PIP display, more than 99% of the bandwidth and multimedia information being transmitted is being wasted. In an embodiment according to the present invention, only the information selected for viewing may be transmitted to an end-user location.

In an embodiment according to the present invention, multimedia information that the end-user requests is transmitted to the end-user, instead of every channel that a service provider offers. For example, if the end-user selects a channel to view, and the end-user is subscribed to the selected channel, then when the end-user selects the channel on the STB 220 to view, the STB 220 transmits a request for the multimedia information associated with that channel to the content server located at a geographically proximate (local) service provider location. In response to the channel request, the content server may initiate transmission of the multimedia information associated with the selected channel.

The STB 220 may also be adapted to determine whether the end-user is subscribed to the requested channel prior to sending the channel transmission request. In an embodiment according to the present invention, the STB 220 may send the request to the content server, wherein the content server may be adapted to determine whether the end-user is subscribed to the requested channel.

If the end-user is subscribed to the selected channel, as determined by either the STB 220 or the local service provider's content server, then in response to the channel request, the content server may initiate transmission of the multimedia information associated with the selected channel. If the end-user is not subscribed to the selected channel, then either the STB 220 or the local service provider's content server may cause a message to be displayed upon the TV set 210 informing the end-user that the selected channel has not been subscribed and is not currently authorized for viewing. The end-user may be prompted to initiate subscription or pay for viewing the selected channel (such as for example, pay-per-view PPV).

In another embodiment according to the present invention, if the end-user chooses to view two different channels at once, by activating the PIP function on the T V set, the STB 220 may request transmission of both selected channels from the content server at the local service provider location.

In an embodiment according to the present invention, the amount of information being transmitted to a particular end-user is significantly reduced over prior transmission methods. Prior transmission methods comprise transmitting every channel that the service provider offers simultaneously to every end-user, resulting in wasted bandwidth and transmission of unwanted and un-requested information.

Because the amount of multimedia information being transmitted in an embodiment according to the present invention is significantly reduced, the bandwidth used to perform the transmission is also significantly reduced. Therefore, the channel and the multimedia information therein may be provided with higher quality using additional bandwidth than currently being used per channel. Cable theft can also be significantly reduced, if not totally eliminated.

Typically, cable TV service providers transmit every channel to all subscriber end-user location and those channels subscribed by the end-user may be de-scrambled at the end-user locations via a descrambling STB. BY transmitting only the multimedia information channel being requested by an end-user, and by authentication of subscribed services, cable theft is prevented, because only the channel being transmitted is available for theft instead of a service providers entire service package according to an embodiment of the present invention.

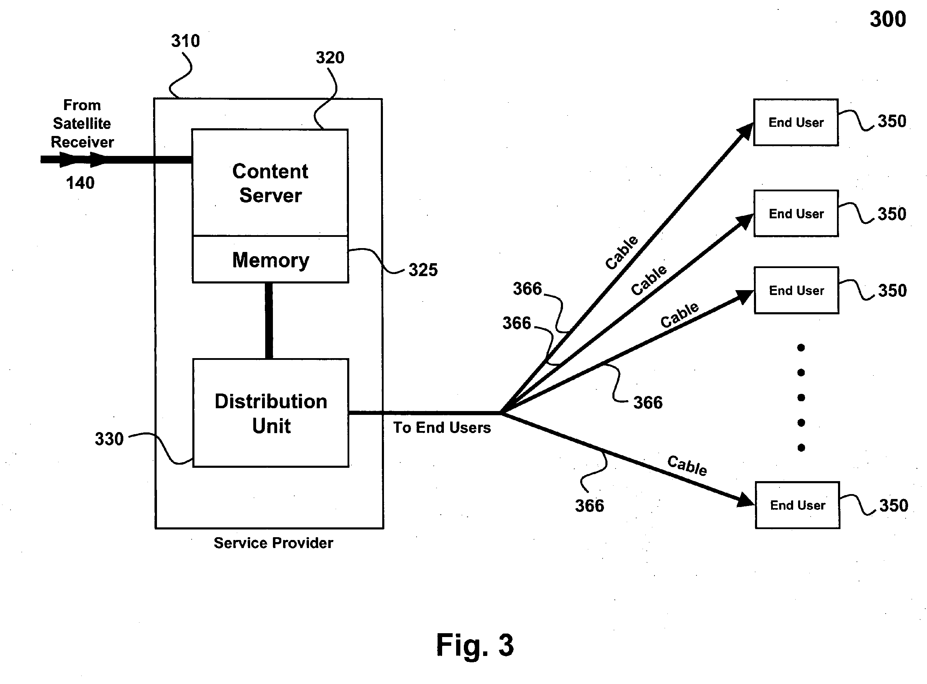

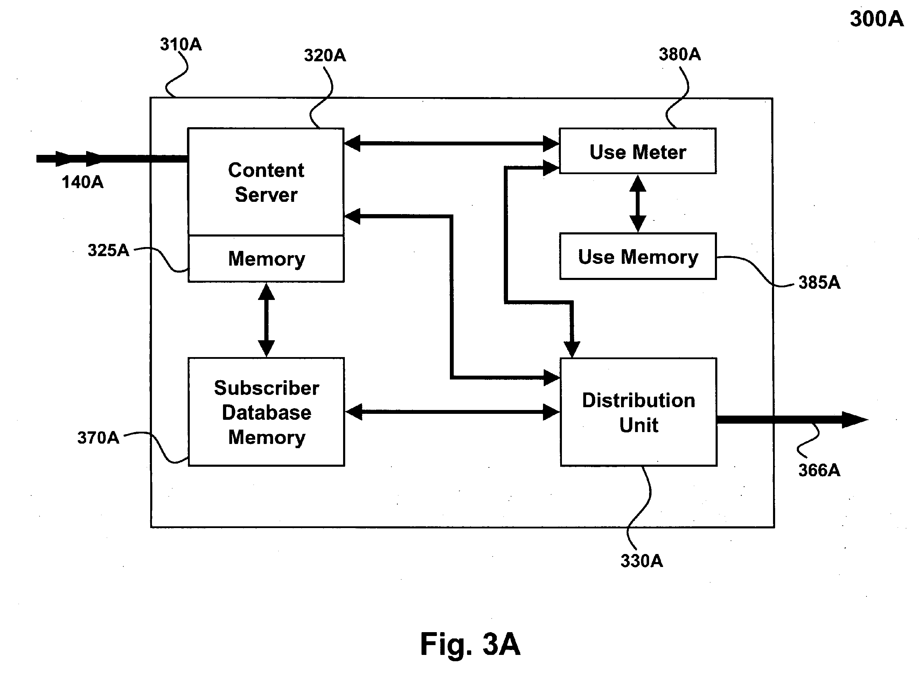

**Figure 3** is a block diagram illustrating a multimedia distribution network 300 in accordance with an embodiment of the present invention. The multimedia distribution network 300 illustrated in **Figure 3** may comprise a local service provider system 310. The local service provider system 310 may comprise at least a content server 320 and a distribution unit 330. The content server 320 may receive the plurality of multimedia transmissions via transmission cable 340 from a satellite receiver, for example, satellite receiver 120 as illustrated in **Figure 1**.

The content server 320 may comprise a storage unit for receiving and storing multimedia transmission information. The content server 320 may also be adapted to provide on-demand access to streaming media transmissions (channels) being received from the satellite receiver 120. The content server 320 may be adapted to validate and authorize channel requests received from the plurality of end-users 350.

In an embodiment according to the present invention, an end-user 350 may select a channel for viewing. The end-user's STB 220, for example, as illustrated in **Figure 2**, may transmit a channel request via cable 366 to the service provider location 310. The channel request may be received at a distribution unit 330 which may convey the request to the content server 320. Alternatively, the channel request may be received at the content server 320.

**Figure 3A** is a block diagram illustrating a multimedia distribution and metering system 300A in accordance with an embodiment of the present invention. The multimedia distribution and metering system 300A illustrated in **Figure 3A** may comprise a local service provider system 310A. The local service provider system 310A may comprise at least a content server 320A and a distribution unit 330A. The content server 320A may receive the plurality of multimedia transmissions via transmission cable 340A from a satellite receiver, for example, satellite receiver 120 as illustrated in **Figure 1**.

The content server 320A may comprise a storage unit for receiving and storing multimedia transmission information. The content server 320A may also be adapted to provide on-demand access to streaming media transmissions (channels) being received from the satellite receiver 120. The content server 320A may be adapted to validate and authorize channel requests received from the plurality of end-users 350 by accessing a subscriber database memory 370A. The subscriber database memory 370A may comprise end-user STB information, end-user channel subscription information, end-user spending limit information, end-user blocked channel information, etc.

In an embodiment according to the present invention, an end-user 350, as illustrated in **Figure 3**, may select a channel for viewing. The end-user's STB 220, for example, as illustrated in **Figure 2,** may transmit a channel request via cable 366A to the service provider location 310A. The channel request may be received at a distribution unit 330A which may convey the request to the content server 320A. Alternatively, the channel request may be received directly at the content server 320A.

The content server 320A may process the channel request. Processing the channel request at the content server 320A may comprise analyzing and evaluating the channel request. Analyzing and evaluating the channel request may comprise determining from the channel request end-user STB information, etc., and thus, the associated information related to the end-user requesting the channel.

The channel request may be compared with a database of subscriber information 370A, wherein if it is determined that channel is subscribed, the channel request is initiated. Initiation of the channel request may comprise transmitting the requested channel multimedia information to the STB 220 at the end-user location 350.

If it is determined that the channel is not subscribed, the content server 320A may transmit a message to the STB 220 informing the end-user that the channel requested is not subscribed and authorized for viewing. The transmitted message may also comprise a prompt to cause the end-user to subscribe to the channel and/or pay for viewing the channel, such as pay per view (PPV). The distribution unit 330A may comprise a plurality of transmission heads. The transmission heads may comprise switches or relays adapted to maintain continuous communication with the STB 220 at end-user location 350.

Maintaining continuous communication may also comprise metering and accounting of multimedia usage by the plurality of end-users. The metering may be performed by a use meter 380A in the service provider location 310A. The use meter 380A may monitor end-users' channel selections and time of viewing information. The monitored information may be stored in a use memory 385A, wherein end-user viewing habits may later be evaluated and analyzed.

The use meter 380A may be connected to the distribution unit 370A for monitoring the multimedia information distributed to the end-users 350. The use meter 380A may also be connected to the content server 320A.

In an embodiment according to the present invention, a method of usage based metering may be performed. The method may comprise receiving a channel request from a STB 220 at an end-user location 350. The channel request may be received at distribution unit 330A or content server 320A.. Channel request information may be metered by use meter 380A and stored in use memory 385A.

A use log of end-user viewing activity may be created in the use memory 385A. The use log may comprise channel requests received from end-users' STBs, length of time channel was being transmitted, etc. The use log may be created and stored in the use memory 385A. The use log information may additionally be compared against a program listing for the particular channels and times to determine viewing habits of end-users. The viewing habit information may be used to determine programming choices to add and programming choice to eliminate.

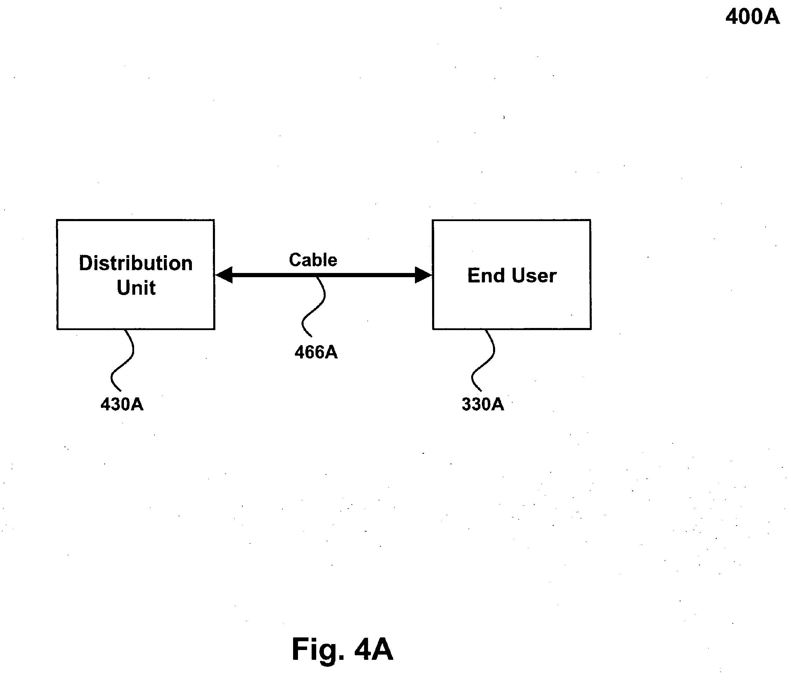

**Figure 4A** is a block diagram illustrating a cable multimedia distribution network 400A in accordance with an embodiment of the present invention. **Figure 4A** illustrates a wired multimedia distribution network 400A. In the wired multimedia network 400A, according to an embodiment of the present invention, each respective end-user 450A may be connected (hard wired) to a transmission head of the distribution unit 430A at the local service provider location via a cable 466A.

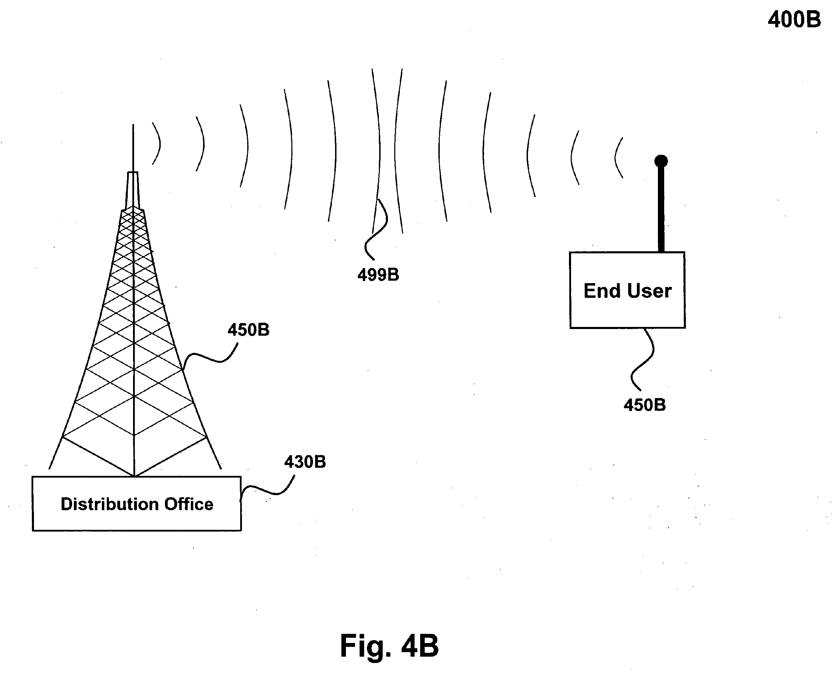

**Figure 4B** is a block diagram illustrating a wireless multimedia distribution network 400B in accordance with an embodiment of the present invention. **Figure 4B** illustrates a wireless multimedia distribution network 400B. In the wireless multimedia network 400B, according to an embodiment of the present invention, each respective end-user 450B may be wirelessly connected to a transmission head of the distribution unit in distribution office 430B at the local service provider location via over-the-air (OTA) transmissions 499B.

In an embodiment according to the present invention, the bandwidth and multimedia information being transmitted from the distribution office 430B to each individual end-user 450B has been significantly reduced in comparison to prior multimedia distribution systems. In an embodiment according to the present invention, instead of transmitting every channel that the multimedia service provider offers to every individual end-user 450B, only the selected multimedia information or selected channel is transmitted to the individual end-users 450B. The significant reduction in bandwidth being transmitted makes it possible to transmit the multimedia information wirelessly OTA instead of using a cable.

In an embodiment according to the present invention, the distribution office may be provided with a transmission tower 470B. The transmission tower 470B may be adapted to transmit individualized multimedia information, (i.e., a selected channel) to each individual end-users' STB. Each STB at each end-user location 450B may also be provided with an antenna 480B.

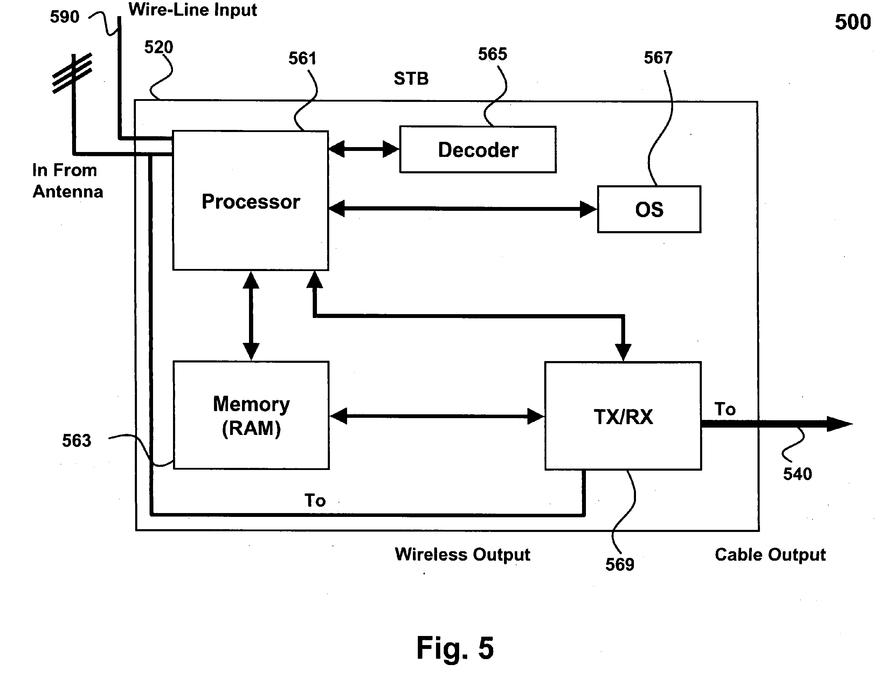

**Figure 5** is a block diagram 500 illustrating a wireless set-top-box (STB) multimedia unit in accordance with an embodiment of the present invention. **Figure 5** illustrates a wireless STB 520 according to an embodiment of the present invention. STB 520 may comprise an antenna 580 for communicating with a wireless multimedia distribution office. The wireless STB 520 may also at least comprise a processor 561, a random access memory 563, an audio/video decoder 565, an operating system 567, and a combination transmitter/receiver 569. The wireless STB 520 may also comprise a cable output 540 providing transmission of the received an decoded multimedia information to a TV set or another display apparatus.

In an embodiment according to the present invention, an end-user may select to view a channel. The end-user selection may be made remotely via a remote control device, wherein the end-user may enter a channel number remotely selecting the channel at the wireless STB 520. The wireless STB 520, in response to the end-user channel selection may determine whether the end-user is subscribed and authorized to view the selected channel. If the end-user is not subscribed or authorized to view the selected channel, then the wireless STB may cause a message to be displayed at the TV set informing the end-user that the channel is not subscribed or authorized for viewing. The wireless STB 520 may also prompt the end-user to subscribe or order the selected channel.

In an embodiment according to the present invention, upon receiving a channel selection request from an end-user, the wireless STB 520 may wirelessly transmit a channel request to the distribution unit at the local service provider location. The transmission request may be transmitted by the combination transmitter/receiver 569. In an embodiment according to the present invention, the transmitter and receiver may be separate components, wherein the transmitter wirelessly transmits the channel request to the distribution unit at the local service provider location.

At the local service provider location, the channel request may be processed. In an embodiment according to the present invention, the channel request may be validated and authorized at one of the distribution unit or the content server. If the channel request is validated the content server may initiate transmission of the multimedia information associated with the requested channel. Transmission of the requested channel may also be carried out wirelessly, wherein the wireless transmitter located at the distribution office transmits the multimedia information to the wireless STB 520.

At the wireless STB 520, the multimedia transmission may be received at antenna 580 and conveyed to processor 561. The processor 561 may convey the multimedia transmission to audio/video decoder 565. The audio/video decoder may be a combination unit or two separate units in embodiment according to the present invention. The multimedia transmission may be decoded and the transmitted to via cable out put 540 to the TV set for display.

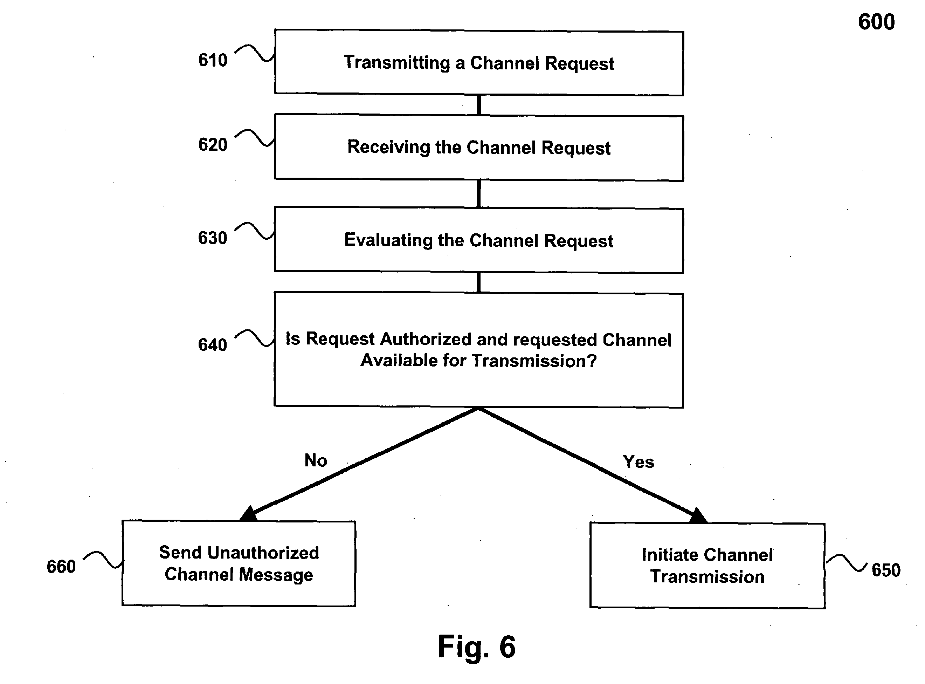

**Figure 6** is a flow diagram 600 illustrating a method of evaluating a channel request in accordance with an embodiment of the present invention. In **Figure 6**, a channel request may be transmitted from an end-user STB to a local service provider office 610. The request may be transmitted via wire or wirelessly. The content server or the distribution unit at the local service provider office receives the channel request 620 and initiates an evaluation of the channel request 630 to determine whether the channel request is valid and authorized 640. Upon determining that the channel request is authorized, the distribution unit may initiate transmission of the requested channel 650. If it is determined that the channel request is not authorized, the distribution unit may transmit a message to the end-users STB indicating that the channel request is not authorized 660.

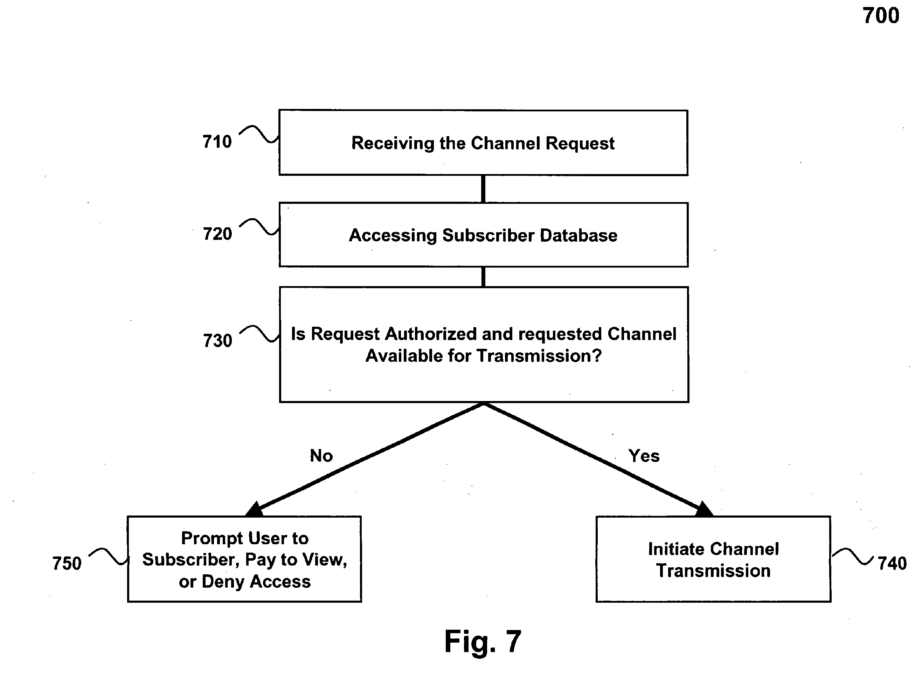

**Figure 7** is a flow diagram 700 illustrating a method of evaluating a channel request in accordance with an embodiment of the present invention. In **Figure 7**, a channel request may be received at the local service provider location 710. In order to determine whether the channel; request is valid and authorized, the content server may be adapted to access a subscriber database 720 and determine whether the channel being requested is authorized 730. Upon determining that the request is valid and authorized, the distribution unit may initiate transmission of the requested channel. If the channel request is determined to be invalid or unauthorized, the distribution unit may transmit a message prompting the end-user to subscribe to the requested channel or pay to view the requested channel 750.

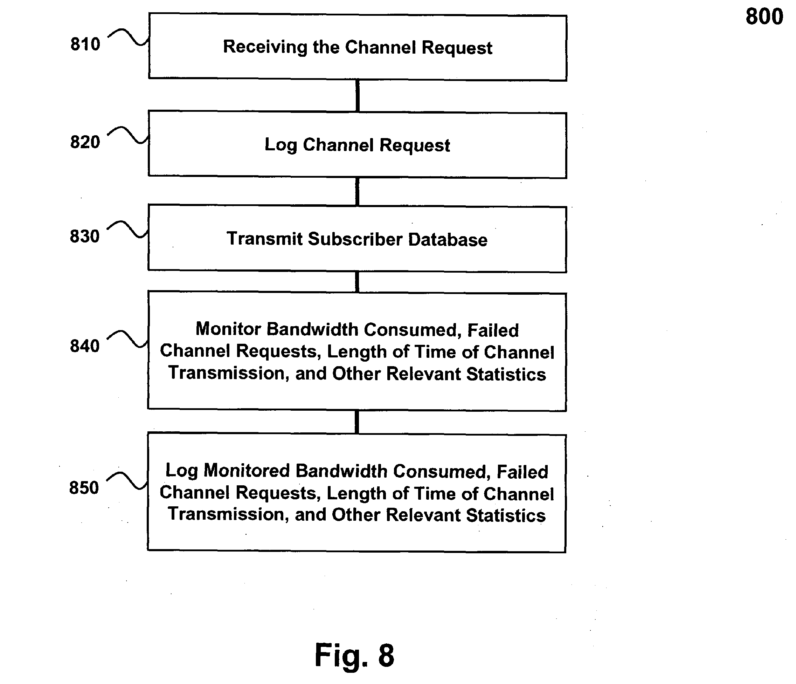

**Figure 8** is a flow diagram 800 illustrating a method of logging and monitoring end-user viewing information in accordance with an embodiment of the present invention. In **Figure 8**, the channel request may be received at the local service provider location 810. The channel request may be logged in a user log 820. If authorized the channel may be transmitted to the end-user STB for display and viewing 830. The use meter may continue to monitor the channel transmission 840 and log the amount of time that the channel was being transmitted and viewed 850.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A multimedia distribution network comprising:
a content server, the content server being adapted to receive and manage a plurality of multimedia transmissions from at least one satellite receiver, the plurality of multimedia transmissions each comprising a plurality of multimedia channels;
a distribution unit for receiving a plurality of requests for particular ones of the plurality of multimedia channels from a corresponding plurality of end-user set-top-boxes (STBs).

2. The network according to claim 1, wherein the distribution unit is adapted to independently transmit on-demand the plurality of multimedia channels.

3. The network according to claim 1, wherein each of the plurality of end-user STBs is adapted to independently request a multimedia channels.

4. The network according to claim 1, wherein the distribution unit is adapted to acquire each requested multimedia channel from the content server and independently transmit each requested multimedia channel respectively to each of the plurality of end-user STBs on-demand.

5. A method of reducing bandwidth use in a multimedia distribution network, the method comprising:
receiving a channel request in at least one of a content server and a distribution unit from a set-top-box (STB);
evaluating the channel request to determine whether the channel request is valid and authorized;
wherein if the channel request is determined to be valid and authorized, initiating transmission of the requested channel, and if the channel request is determined to be invalid and unauthorized, responding to the channel request with a message indicating that the channel request is unauthorized.

6. The method according to claim 5, wherein the multimedia information provider communicates to the STB one of via wire or wirelessly.

7. The method according to claim 5, further comprising receiving and storing multimedia channel information, and providing on-demand access to streaming multimedia channels requested.

8. A multimedia distribution network comprising a plurality of end-user STBs adapted to request a multimedia channel, wherein the end-user STBs comprise:
a processor for processing and managing channel requests and received multimedia channel information, wherein multimedia channel information comprises encoded audio information and encoded video information;
a decoder for decoding the received multimedia channel information, the multimedia channel information is encoded for transmission, wherein the decoder comprises a combination audio and video decoder unit;
a transmitter for transmitting channel requests to the distribution unit; and
a receiver for receiving multimedia channel information and messages associated with the channel requests, wherein the transmitter and receiver comprise a combination transmitter/receiver unit.

9. A set-top-box (STB) adapted to request a multimedia channel and receive multimedia information from a multimedia distribution network, the STB comprising:
an antenna for communicating with a wireless multimedia distribution office;
a processor for processing and managing channel requests and received multimedia information, the multimedia information comprising audio and video information;
an audio decoder for decoding audio information;
an video decoder for decoding video information;
a transmitter for transmitting channel requests to the distribution unit; and
a receiver for receiving multimedia channel information and messages associated with the channel requests.

10. The STB according to claim 9, wherein the audio decoder and the video decoder comprise a combination audio and video decoder unit.
